**Europäisches Patentamt**

**European Patent Office**

**Office européen des brevets**

(19)

(11) Publication number: **0 394 515**

**A1**

## (12) EUROPEAN PATENT APPLICATION

(21) Application number: **89107479.1**

(22) Date of filing: **25.04.89**

(51) Int. Cl.⁵: **G10L 5/06**

(43) Date of publication of application:
**31.10.90 Bulletin 90/44**

(84) Designated Contracting States:
**BE DE FR GB IT NL SE**

(71) Applicant: **EZEL INC.**
**2-22-2 Koishikawa**
**Bunkyo-ku Tokyo 112(JP)**

(72) Inventor: **Kumagai, Ryohei**
**c/o Ezel Inc. Nihonseimei Yotsuya Bldg.**
**16-2 Samon-cho Shinjuku-ku Tokyo 160(JP)**

(74) Representative: **Patentanwälte Grünecker,**
**Kinkeldey, Stockmair & Partner**
**Maximilianstrasse 58**
**D-8000 München 22(DE)**

(54) **Acoustic recognition system.**

(57) An acoustic recognition system comprising:
an input portion for generating a digital pattern in response to inputted analogue acoustic signal;
a characteristics process portion for extracting characteristics from said digital pattern;
a association portion for outputting association pattern according to said characteristics; and
a memory for storaging data in a address corresponding to the association pattern.

Fig. 1

# ACOUSTIC RECOGNITION SYSTEM

## FIELD OF THE INVENTION

The present invention relates to an acoustic recognition system.

## BACKGROUND OF THE INVENTION

DP matching method is the most successful method for acoustic recognition among the conventional acoustic recognition method. A report describes that an average recognition ratio of 85% is obtained in the phoneme recognition including vowels and consonant, by the DP matching method.

In the DP matching method, characteristics in frequency and power of the audio signal inputted are extracted. Then, the characteristics are compared with the reference phonetic pattern. The rules of the comparation is to be determined according to the experiment results. Therefore, the comparation rules are applicable to the audio signals already experimented or the similar.

## SUMMARY OF THE INVENTION

The present invention has an object to provide an acoustic recognition system of high recognition ratio for wide range of audio signals without limited by the experiment or rules.

The acoustic recognition system according to the present invention comprises an input portion for generating digital acoustic pattern in response to inputted analogue audio signal, a characteristics process portion for extracting characteristics from the digital pattern, an association portion for generating associative pattern in response to the characteristics extracted, and a memory for storaging data in an address corresponding to an associative pattern, so as to recognize acoustic signals in the manner of neural network.

## BRIEF DESCRIPTION OF DRAWINGS

Fig. 1 is a block diagram of an embodiment of an acoustic recognition system according to the present invention;

Fig. 2 is a block diagram of a characteristics process portion of the above embodiment;

Fig. 3 is a block diagram of an association portion of the above embodiment; and

Fig. 4 is a block diagram of a quantizing portion of the above embodiment.

## PREFERRED EMBODIMENT OF THE PRESENT INVENTION

Exemplary preferred embodiments of the present invention will be described in detail hereinafter, referring to attached drawings.

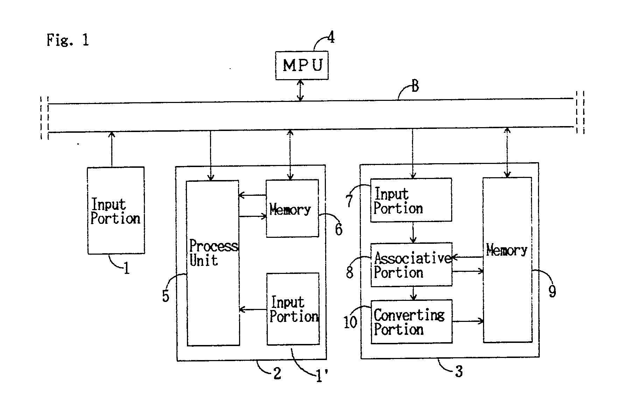

In Fig. 1, an acoustic recognition system comprises an input portion for generating a digital pattern in response to an analogue acoustic signal inputted. A characteristics process portion 2 is provided for extracting characteristics from the digital pattern generated from the input portion 1. The characteristics extracted by the portion 2 is processed in the recognition portion 3. The portions 1 to 3 are connected through a bus B with one another, as well as with MPU 4. The input portion 1 includes an input devices such as micro-phone, as well as I/O. I/O includes a data compression means and a memory for holding data etc., if necessary.

The characteristics process portion 2 includes a main process portion 5 for extracting characteristics. The portion 2 is provided with a memory 6 for holding a digital pattern generated from the input portion 1. An input portion 1' similar to the portion 1 is also incorporated within the portion 2 for improving the process speed.

The recognition portion 3 includes an input portion 7 to which acoustic characteristics to be recognized is inputted, an association portion 8 for associating according to the data processed by the input portion 7, and a converting portion 10 for designating an address where a data is storaged, corresponding to the output from the association portion 8.

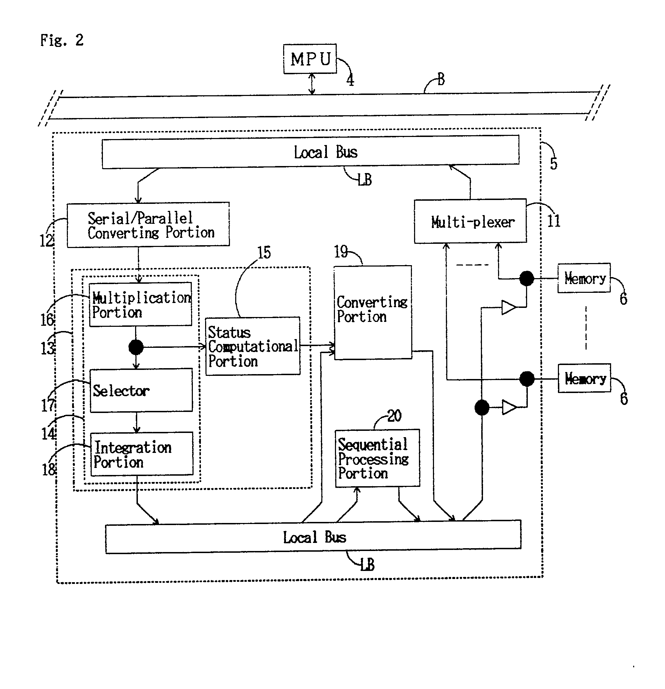

Fig. 2 shows the main process portion 5 in the characteristics process portion. The portion 5 transmits data, selectively inputted through a multiplexer 11, through a local bus LB to serial/parallel converter 12. The converter 12 holds data by a predetermined bytes, for example several ten bytes, then inputs the data parallelly to a computational portion 13. The computational portion comprises a numerical computational portion 14 and status computational portion 15. The parallel data is inputted through a converter 12 to the numerical computational portion 14. The numerical computational portion 14 comprises a multiplication portion 16, selector 17 and integration portion 18, which are connected successively. The numerical calculation portion 14 processes differentiation operation or any other operations including calculation between data. In the typical numerical calculation, the density of each pixel is multiplied by a multiplier, then the total multiplication results are integrated.

According to inventor's experiences, it never happens that a power level of a moment is multiplied by two or more multipliers of difference absolute values in one operation even when the power level of a moment is applied two or more times in one operation. Therefore, the multiplication portion is positioned on the first position of the computational portion 14 so that the number of multiplication kernel is minimized to be same as the number of power levels simultaneously processed. The number of gates included in the circuits following to the multiplication portion 14 such as selector 17 and integration portion 18 is minimized. So the numerical computational portion has maximal performance as well as high process speed by minimal circuit size.

A data flow line is provided from within the numerical computational portion to the status computational portion 15.

The status computational portion 15 performs the judgment or calculations such as follows;

   a) Effective characteristics for segmentation such as steep changing point of power.

   b) Effective characteristics for detecting the middle frame of phoneme such as frequency, local maximum of power etc. and other characteristics.

Since the numerical calculation and status calculation are performed parallelly and independently from each other, each circuit for each calculation is efficient and has high process speed. The output of the status computational portion is effective characteristics of effective data for extracting characteristics. The output from the status computational portion 15 is inputted to a converting portion 19 which performs characteristics extraction as well as calculation characteristics value through integration, computation and so forth.

The converting portion comprises a high speed memory such as static RAM (random access memory) and a light computational portion connected to a branch of an output of the memory. The output of the light computational portion is fed back to an input of the memory. This construction enables high speed processing of recursive calculation, integration, sequential comparison or other complex calculation by small circuit.

The light computational portion 13 and converting portion 19 output data through a local bus LB for output to one of the frame memories 6.

A sequential processing portion 20 is connected to the local bus LB. The sequential processing portion 20 processes sequential processings. The sequential processing portion comprises a line memory and ratches for holding (1H-5) power lev-

els' processed data including data on the previous signal groups, as well as a logical portion for processing each power level referring the processed data in the predetermined time length.

The process unit extracts various characteristics in high speed, so a effective characteristics is supplied to the recognition portion 3. When a dual port memory is used for the memory 6, data is read from and write to the memory 6 in high speed.

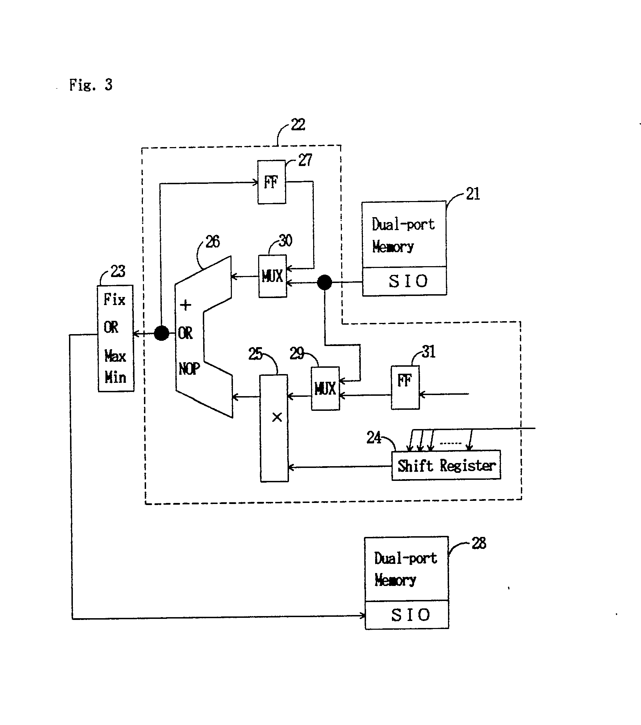

The associative portion 8 of the recognition portion 3 comprises for example a circuit in Fig. 3.

In the circuit, a matrix calculation concerning memory matrix is performed as follows;

$$\vec{z} = \emptyset 0\{m\vec{y}\}$$
$$M = \vec{x}\,\vec{x}',$$

where,

$\vec{x}$ : memory stored (lateral vector);

$\vec{x}'$ : transposed matrix of $\vec{x}$ ;

M : memory matrix;

$\vec{y}$ : transposed matrix of input matrix (lateral vector);

$\emptyset 0$: quantizing function, which converts positive element of matrix to "1", zero element to "0" and negative element to "-1";

$\vec{z}$ : associative result (lateral vector)

The recognition portion 3 comprises a dual port memory 21, the serial I/O of which is connected to a associative portion or matrix calculation portion 22. The output of the matrix calculation portion is connected to a quantizing portion 23.

In the memory 21, a matrix generated by multiplication of $\vec{x}$ and $\vec{x}'$ is stored. When $\vec{x}$ is n-rows matrix, the matrix of $\vec{x} \times \vec{x}'$ becomes n X n matrix. Elements in one row of the matrix is transmitted to serial access memory SAM of the dual port memory in one clock cycle, and each element of the row in SAM is read from the serial I/O SIO in one clock cycle. Therefore, the matrix data in the memory is read out quickly.

The matrix calculation portion 22 has an input portion for association 24 which consists for example of a shift register for string input matrix $\vec{y}$. Each element of $\vec{y}$ in the input portion 24 is multiplied by a corresponding element outputted from SIO, and the multiplication results are integrated by an adder portion 26. For this addition, the adder portion 26 is provided with a holding portion 27 which hold intermediately the integration value and finally the integration result.

The integration result

$$M \times \vec{y}'$$

is inputted to the quantizing portion 23.

The quantizing portion 23 converts each element of $M \times \vec{y}'$ to "1", "0" or "-1" when the element is positive, zero and negative, respectively. The converted value is stored in the second dual port memory 28.

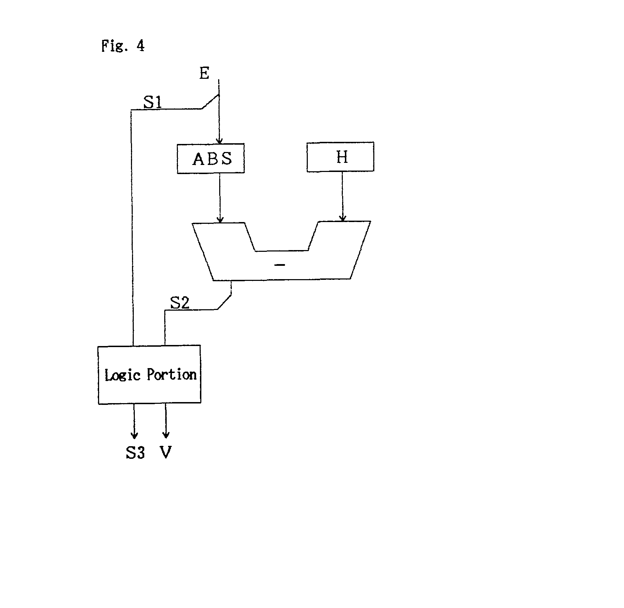

The quantizing portion 23 is constructed for example as shown in Fig. 4. In the portion 23, an absolute value of a element E is compared with a threshold H so that a comparison result is outputted as a sign flag S1. The sign flag S1 of the element E and the sign flag S2 are inputted to a logic portion, than an absolute value V and a sign flag S3 of a quantized value is outputted from the logic portion, according to the calculation below.

$S3 = S1 \times \bar{S2}$

$V = \bar{S2}$

The truth table of the above calculation is as follows;

### Table 1

| S1 | 0 | 0 | 1 | 1 |
|---|---|---|---|---|
| S2 | 0 | 1 | 0 | 1 |
| S3 | 0 | 0 | 1 | 0 |
| V | 1 | 0 | 1 | 0 |

The input matrix $\vec{y}$ is generated by the characteristics process portion as a characteristic value. When input matrix has a size of 30 X 30 elements and each element has a size of 1 byte, the matrix M has a size of 900 x 900 bytes. Since a ordinal dual port memory has unit read out time of 40nsec/byte, it takes only

40 X 10⁻⁹ X 900 X 900 = 32.4nsec

for the above matrix calculation.

When a pipe-line construction is applied to the recognition portion, the process speed is improved. The second dual port memory 28 can be omitted by writing calculation result in the first memory 21 from which the data for calculation is read out.

The matrix calculation portion 22 further comprises a component for learning, one of the associative portion and learning portion is alternatively selectable by a multiplexer.

The multiplication portion 25 is connected with a multi-plexer for selecting the serial output or the input pattern, alternatively. The adder portion 26 is connected with a multi-plexer for selecting the output of the holding portion 27 or the serial output.

An input pattern for leaning is a matrix generated by multiplying the input pattern by a transposed matrix of the input pattern. For calculating one element of the matrix, each element of the vector stored in the shift register 24 is multiplied by one of the element and all the multiplication results are integrated. The one element as a multiplier is held in a holding portion 31.

The matrix generated by the above calculation is added to the memory matrix M in the adder portion 26.

The quantizing portion 23 can be defined for limitation of maximum of each element so that when a element after the learning above becomes more than the maximum, the element is converted to the maximum. Without such limitation, a value exceeding the maximum may become return to a small value, like ring counter.

The elements of the memory matrix is improved by a teaching signal given in response to the association result so that the neural network type recognition unit is optimized for an association. It is not necessary to predetermine the association pattern. Any phoneme can be recognized within a limit of the capacity of the recognition portion 8. The recognition portion 5 can learns user's phoneme patterns so as to be be able to recognize user's voice in high probability.

In the memory 9, elements of the memory matrix and data to be associated is stored; a character codes set of Chinese characters may be a data to be associated. On association, each element of the memory matrix is transmitted to the dual port memory 21 of the associative portion 8. When the data is a character codes set or phonetic codes set, the character can be directly designated. It is also possible to convert the output of the associative portion 8 by a converting portion 10 to a character code.

The construction of the associative portion 8 is not limited by the construction above. A connection machine or any other neural network can be applied. However, considering the current semi-conductor technology, matrix calculation type neural network is practical.

The characteristics process portion can be changed to any high speed processing means for extracting various characteristics.

Although only a few exemplary embodiments of this invention have been described in detail above, those skilled in the art will readily appreciate that many modifications are possible in the exemplary embodiments without materially departing from the novel teachings and advantages of this invention.

Accordingly, all such modifications are intended to be included within the scope of this invention as defined in the following claims.

### Claims

1. An acoustic recognition system comprising:
an input portion for generating a digital pattern in response to inputted analogue acoustic signal;
a characteristics process portion for extracting characteristics from the digital pattern;
a association portion for outputting association pattern according to the characteristics; and
a memory for storaging data in a address corresponding to said association pattern.

Fig. 1

MPU — 4

B

Input Portion — 1

Process Unit — 5

Memory — 6

Input Portion — 2 / 1'

Input Portion — 7

Associative Portion — 8

Converting Portion — 10

Memory — 9

3

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PROCEEDINGS OF THE CONFERENCE ON COMPUTER GRAPHICS, PATTERN RECOGNITION AND DATA STRUCTURE, LONG BEACH, 14th-16th May 1975, pages 196-200, IEEE, Long Beach, US; T. ICHIKAWA: "An association mechanism based on coding theory and its application to pattern recognition" * Paragraph 2, "Asssociative Memory" * | 1 | G 10 L  5/06 |
| A | PATTERN RECOGNITION LETTERS, vol. 7, no. 1, January 1988, pages 19-25, Elsevier Science Publishers B.V. (North-Holland), Amsterdam, NL; Y. YONG: "Handprinted Chinese character recognition via neural networks" * Paragraph 3, "Neural network model of CAAM: General case" * | 1 | |
| A | EP-A-0 074 769 (COMPUTER BASIC TECHNOLOGY RESEARCH ASSOCIATION) * Abstract * | 1 | TECHNICAL FIELDS SEARCHED (Int. Cl.5) |
| A | WO-A-8 702 817 (GRUMMAN AEROSPACE CORP.) * Abstract * | 1 | G 10 L  5/06 |

The present search report bas been drawn up for all claims

| Place of search | Date of completion of the search | Examiner |
|---|---|---|
| THE HAGUE | 18-12-1989 | ARMSPACH J.F.A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)